# EUROPÄISCHE PATENTSCHRIFT

(11) **EP 2 676 867 B1**
(45) Veröffentlichungstag und Bekanntmachung des Hinweises auf die Patenterteilung: **02.12.2015**
(21) Anmeldenummer: 13169850.8
(22) Anmeldetag: 30.05.2013
(51) Int. Cl.: B62D 6/00, B62D 101/00, B62D 113/00, B62D 119/00, B62D 137/00

(54) **Verfahren zur Unterdrückung von Störgrößen in einem Lenksystem eines Kraftfahrzeugs und Lenksystem in einem Kraftfahrzeug**
Method for the suppression of interference in a steering system of a motor vehicle and steering system in a motor vehicle
Procédé de suppression de grandeurs perturbatrices dans un système de direction d'un véhicule automobile et système de direction dans un véhicule automobile

(30) Priorität: 20.06.2012 DE 102012012307
(43) Veröffentlichungstag der Anmeldung: 25.12.2013
(73) Patentinhaber: Volkswagen Aktiengesellschaft, 38440 Wolfsburg (DE)
(72) Erfinder: Geyer, Christoph, 38547 Wettmershagen (DE)

(56) Entgegenhaltungen:
- DE-A1-102005 002 614

## Beschreibung

Die Erfindung betrifft ein Verfahren zur Unterdrückung von Störgrößen in einem Lenksystem eines Kraftfahrzeugs und ein Lenksystem in einem Kraftfahrzeug.

Aus der DE 10 2006 044 088 B4 ist ein Verfahren zum Ausgleich von Antriebseinflüssen eines Antriebsstranges eines Kraftfahrzeuges auf seine Lenkung bekannt, das eine elektrische Servolenkung aufweist, wobei ein in dem Kraftfahrzeug integriertes, permanent aktiviertes Simulationsmodell des Antriebsstranges vorgesehen ist, in dem aus einem Antriebsverhalten Störgrößen vorhergesagt werden, sodass ein Ausgleichmoment für die Servolenkung erzeugt wird, welches den Störgrößen entgegenwirkt, wobei ein Lenkkraftfehler, eine Gewichtung und eine Sollkraft Zahnstange einem Block zur Korrektur der Zahnstangenkraft zugeleitet werden, und wobei ein Lenkradhandmoment und ein EPAS Servomoment einem Block Lenkgetriebe zugeleitet werden, sodass eine wirkliche Zahnstangenkraft erzeugt wird, die einer Schnittstelle zum Signal Sollkraft Zahnstange zugeleitet wird, sodass für den Block hieraus eine Sollkraftabweichung erzeugt wird, wobei in dem Block ein Signal Ausgleich Zahnstangenkraft erzeugt wird, sodass das Ausgleichsmoment einer Schnittstelle zum Ausgleich des Servomoments zugeführt wird.

Dem Verfahren liegt die Erkenntnis zugrunde, dass eine auf einem Bremssystem aufbauende Hilfsvorrichtung zur Stabilitätskontrolle eines Kraftfahrzeuges mit der elektrischen Servolenkung kombiniert werden kann. Diese Hilfsvorrichtung beeinflusst ein möglicherweise sich abrupt änderndes Lenkgefühl des Fahrzeugführers, wenn sich der Reibungswiderstand eines der Räder einer Achse asymmetrisch verändert. Dabei wird ein autonomes Gegenlenksignal erzeugt, welches vom Fahrzeugführer wahrgenommen werden kann. Die Eingabegrößen hierzu basieren auf einem Radlängsschlupf. Mittels der Erfindung dagegen kann ein sich abrupt änderndes Lenkgefühl unter Beschleunigungskräften ohne Zuhilfenahme der auf dem Bremssystem aufbauenden Hilfsvorrichtung zur Stabilitätskontrolle kompensiert werden.

Vorteilhaft lassen sich die (ungewünschten) Störgrößen zuverlässig erkennen, und von den (gewünschten) Rückmeldungen des Reifen-Straße-Kontaktes separieren. Das Simulationsmodell ist bevorzugt in einem Steuergerät des Kraftfahrzeuges abgelegt. Mittels des Verfahrens wird vorteilhaft erreicht, dass eine Amplitude und eine Wirkrichtung der Antriebseinflüsse ermittelt und durch eine gegengerichtete Kraft im Lenkungssystem eliminiert werden. Dadurch wird das Ziel der Ausgleichsfunktion erreicht, das die störenden Einflüsse vom Fahrer ferngehalten bzw. Veränderungen der gewünschten Fahrtrichtung des Fahrzeugs vermieden werden. Hierbei handelt es sich vorteilhaft um eine permanent aktivierte Funktion, die Antriebseinflüsse bzw. das Antriebsverhalten berechnet und durch die Vorgabe eines Korrekturmomentes bzw. Ausgleichmomentes an die elektrische Servolenkung ausgleicht.

Die Vorhersage bzw. Berechnung der Antriebseinflüsse auf die Lenkung, welche im Folgenden als Störgröße bzw. Störmoment bezeichnet werden, beruht auf einem vereinfachten Simulationsmodell des Antriebsstranges, das Eingabedaten von anderen bzw. von zumindest einem elektronischen Steuergerät des Kraftfahrzeuges (Fahrzeugbus) empfängt. Zu diesen Eingabedaten gehören beispielsweise Fahrerwünsche, wie Gaspedalstellung, Kupplung und Lenkeingabe als auch Reaktionen des Fahrzeugs auf diese Vorgaben, wie Motormoment, Motordrehzahl, Raddrehzahlen und Querbeschleunigung. Aus diesen Eingabedaten kann mit einer geeigneten Parametrierung des Modells in weiten Bereichen der Fahrzustände eine sichere Vorhersage der Störgrößen bzw. Störmomente getroffen werden. Zu diesen Parametern gehören unter anderen die Rotationsträgheiten der angetriebenen Räder und des Differentials, die Steifigkeiten der Antriebswellen, Reibbeiwerte für die Differentialgetriebeverzahnungen, Geometriedaten der angetriebenen Vorderachse und ihrer Räder sowie Lenk- und Getriebeübersetzungen.

Weiterhin gibt es aber auch Bereiche, in denen diese Vorhersage der Störgrößen nicht sicher ist. Dieses gilt insbesondere, wenn die Drehzahldifferenz der angetriebenen Vorderräder sich mit kleinen Amplituden um den Nullpunkt bewegt. In diesen Bereichen muss das Korrekturmoment bzw. Ausgleichsmoment bei starken Beschleunigungen, in denen Störgrößen bzw. Störmomente mit hoher Wahrscheinlichkeit auftreten, einer Differenz aus gemessener bzw. abgeschätzter Zahnstangenkraft und einer intern oder extern zu berechnenden Referenz nachgeregelt werden. Diese Referenz (Sollkraft Zahnstange) ist beispielsweise aus den Fahrbedingungen des Kraftfahrzeugs zu berechnen. In Betracht gezogen werden hier z.B. Fahrzeuggeschwindigkeit, Querbeschleunigung, Gierrate, Lenkwinkel und Lenkwinkeländerung. Zusätzlich können Störmomente durch Fahrbahneinflüsse wie einseitige Bodenwellen oder Spurrillen verursacht werden. Diese Ereignisse werden durch einen weiteren Algorithmus detektiert und die Abweichung zur oben angegebenen Referenz entsprechend ausgeglichen.

Die gattungsgemäße DE 10 2005 002 614 A1 offenbart ein Lenksystem mit einem Servomotor, Sensoren und einer Steuereinheit, die anhand der Sensordaten ein Unterstützungsmoment aufgebracht durch dem Servomotor bestimmt. Weiterhin erfolgt eine Berücksichtigung der Vertikalbeschleunigung des Fahrzeugs als Störgröße bei der Ermittlung des Unterstützungsmoment.

Der Erfindung liegt das technische Problem zugrunde, ein Verfahren zur Unterdrückung von Störgrößen in einem Lenksystem sowie ein derartiges Lenksystem zu schaffen, das weitere Störgrößen wirksam unterdrückt.

Die Lösung des technischen Problems ergibt sich durch die Gegenstände mit den Merkmalen der Ansprüche 1 und 6. Weitere vorteilhafte Ausgestaltungen der Erfindung ergeben sich aus den Unteransprüchen.

Das Verfahren bzw. das Lenksystem zur Unterdrückung von Störgrößen in einem Lenksystem eines Kraftfahrzeuges mittels eines Servomotors, mindestens eines Sensors zur Erfassung eines Lenkwinkels und/oder Lenkmoments und/oder einer Lenkkraft sowie einer Auswerte- und Steuereinheit, die in Abhängigkeit der Daten des mindestens einen Sensors oder eines weiteren Sensors ein Unterstützungsmoment berechnet, das durch den Servomotor aufgebracht wird, ist wobei mittels einer Einrichtung eine vertikale Beschleunigung des Kraftfahrzeuges erfasst oder ermittelt wird, aus den Daten des mindestens einen Sensors ein eingestellter Lenkwinkel und/oder ein eingestelltes Lenkmoment und/oder eine eingestellte Lenkkraft ermittelt wird, dadurch gekennzeichnet, dass nach Erfassung einer vertikalen Beschleunigung größer als ein Schwellwert für eine nachfolgende Beobachtungszeit Änderungen des eingestellten Lenkwinkels und/oder eingestellten Lenkmoments und/oder eingestellten Lenkkraft ausgewertet werden, wobei Änderungen des Lenkwinkels und/oder des Lenkmoments und/oder der Lenkkraft in der Auswerte- und Steuereinheit mittels einer geänderten Abbildungsfunktion für das Unterstützungsmoment berechnet werden und/oder eine Lenkungsdämpfung verändert wird.

Dabei liegt der Erfindung folgende Erkenntnis zugrunde. Insbesondere bei einer schnell gefahrenen Autobahnkurve kommt es häufig vor, dass die Fahrbahn nicht eben ist. Sehr oft existieren Bodenwellen, die dazu führen, dass die Gewichtskraft der Passagiere zunimmt (durchfahren eines Tals) bzw. abnimmt (überfahren einer Kuppe). Dieser Effekt hat auch Auswirkungen auf die Arme bzw. Hände. Bei einer Geradeausfahrt (Lenkwinkel gleich Null) befinden sich die Hände typischerweise symmetrisch am Lenkrad (10 nach 10 Handstellung). Aufgrund der Symmetrie gleichen sich dabei die Störmomente aus und die Änderung der Gewichtskraft hat keine Auswirkungen auf das Lenkverhalten. Jedoch in einer Kurve (Lenkwinkel ungleich Null) bringt nun die veränderte Lage der Hände (Arme, Körper) ein zusätzliches, ungewolltes Lenkmoment auf, welches durch den Fahrer durch Anpassung der Lenkkräfte bzw. Armkräfte mit einiger Verzögerung ausgeglichen wird. Ein leichtes Schlingen ist das Resultat. Dies wird nun erfindungsgemäß unterdrückt. Anschaulich wird durch die vertikale Beschleunigung das Einfedern des Kraftfahrzeuges erfasst. Erfolgt dann anschließend zunächst das Überlenken und danach das Korrekturlenken, kann dies als Stör-Lenkimpuls bewertet und entsprechend unterdrückt werden. Auch bei Lenkwinkeln von 0° (Geradeausfahrt) kann dieser Effekt allerdings auftreten, wenn der Fahrer nur eine Hand am Lenkrad hat, sodass erfindungsgemäß auch diese Störlenkimpulse erfasst und reduziert werden können. Dabei ist es möglich, mittels geeigneter zusätzlicher Sensorik die Handstellung bzw. die Anzahl der Hände am Lenkrad zu detektieren, um eine Einhand-Lenkung zu erfassen. Dabei kann die vertikale Beschleunigung (Z-Richtung) direkt mittels eines Sensors erfasst werden. Alternativ oder zusätzlich kann die vertikale Beschleunigung auch aus den Daten bereits vorhandener Sensoren ermittelt werden. Beispielsweise kann aus den Neigungssensoren einer Leuchtweitenregelung die vertikale Beschleunigung abgeleitet werden. Alternativ oder zusätzlich können die Daten einer Fahrwerksfederung und/oder die Reifendrucksensoren herangezogen werden. Ebenso ist es möglich, vertikale Beschleunigungen quasi im Voraus zu schätzen, wobei anhand der Daten einer digitalen Straßenkarte mit Höheninformationen und der aktuellen Fahrzeuggeschwindigkeit eine zu erwartende vertikale Beschleunigung berechnet wird.

Die Unterdrückung kann dabei derart gestaltet sein, dass durch die geänderte Abbildungsfunktion das Unterstützungsmoment reduziert wird, d.h. der Stör-Lenkimpuls führt zu einer Lenkbewegung, die aber nicht so ausgeprägt ist.

Alternativ kann die Lenkungsdämpfung verändert werden. Anschaulich kann die Lenkung beispielsweise träger eingestellt werden, sodass die Lenkung auf kurze Stör-Impulse langsamer und weniger ausgeprägt reagiert.

Weiter sei angemerkt, dass der Sensor, dessen Änderung für das Stör-Lenkimpuls ausgewertet wird, ungleich dem Sensor sein kann, dessen Daten in der Auswerte- und Steuereinheit zur Berechnung des Unterstützungsmoments verwendet werden. So kann beispielsweise der Stör-Lenkimpuls mittels eines Lenkwinkelsensors anhand der Lenkwinkeländerungen detektiert werden, wohingegen das Unterstützungsmoment anhand der Daten eines Drehmomentsensors in der Auswerte- und Steuereinheit erfolgt. Vorzugsweise wird jedoch der gleiche Sensor für die Detektion der Änderung wie für die Berechnung des Unterstützungsmoments herangezogen.

Nachfolgend wird nur noch von Lenkwinkeländerungen gesprochen, wobei die Ausführungen sinngemäß auch für Lenkmomentänderungen und/oder Lenkkraftänderungen gelten. Vorzugsweise wird der Stör-Lenkimpuls vollständig unterdrückt, d.h. das Unterstützungsmoment für die Lenkwinkeländerungen aufgrund des Stör-Lenkimpulses wird auf Null gesetzt, wobei jedoch die Unterstützung für den zuvor eingeschlagenen Lenkwinkel erhalten bleibt.

Da die Lenkwinkeländerungen aufgrund der Gewichtskraftänderung relativ schnell erfolgen, kann zusätzlich noch die Lenkwinkeländerungsgeschwindigkeit berücksichtigt werden, d.h. schnelle Änderungen werden unterdrückt und langsame zugelassen.

In einer weiteren Ausführungsform werden Lenkwinkeländerungen größer als ein erster Schwellwert und kleiner als ein zweiter Schwellwert mit der geänderten Abbildungsfunktion berechnet und Lenkwinkeländerungen größer als der zweite Schwellwert mit der ursprünglichen Abbildungsfunktion berechnet. Hierdurch wird erreicht, dass bewusste Lenkwinkeländerungen des Kraftfahrzeugführers unterstützt werden, beispielsweise weil dieser einem Objekt ausweichen will. Dabei sei angemerkt, dass der erste Schwellwert im Extremfall auch Null sein kann, vorzugsweise aber größer als Null ist. Die Schwellwerte werden vorzugsweise vorab werkseitig durch Fahrversuche ermittelt. Dabei kann weiter vorgesehen sein, dass die Schwellwerte fahreradaptiv sind, d.h. sich auf das Verhalten des individuellen Fahrers einstellen, da die Stör-Lenkimpulse sowohl vom Gewicht des Fahrers abhängig sind als auch von der Handhabung des Lenkrades. Weiter kann auch vorgesehen sein, dass der Fahrer die Funktion zur Unterdrückung deaktivieren kann.

In einer weiteren Ausführungsform wird das Verfahren zur Unterdrückung in Abhängigkeit eines Schwellwertes für die Kraftfahrzeuggeschwindigkeit aktiviert. Der Schwellwert liegt beispielsweise bei 80 km. Es sind aber auch höhere Schwellwerte zwischen 80 km bis 150 km möglich, aber auch niedrigere bis beispielsweise 60 km.

In einer weiteren Ausführungsform ist die geänderte Abbildungsfunktion von der Kraftfahrzeuggeschwindigkeit parametrisiert, d.h. je nach Kraftfahrzeuggeschwindigkeit sind die Abbildungsfunktionen unterschiedlich. Auch können die Schwellwerte für die vertikale Beschleunigung und/oder die Lenkwinkeländerung abhängig von der Geschwindigkeit gewählt werden. Alternativ oder zusätzlich können die Abbildungsfunktionen auch in Abhängigkeit in vertikaler Beschleunigung und/oder der Lenkwinkeländerung und/oder des eingestellten Lenkwinkels parametriert sein.

In einer weiteren Ausführungsform kann das Lenksystem, insbesondere die Auswerte- und Steuereinheit, eine akustische und/oder optische und/oder haptische Warneinrichtung ansteuern, um den Kraftfahrzeugführer zu warnen, insbesondere wenn bei hoher Kurvengeschwindigkeit ein fahrdynamischer Grenzwert überschritten wird. Insbesondere bei einer schnellen Kurvenfahrt kann es dazu kommen, dass die Räder kurzzeitig die Bodenhaftung verlieren. Dies kann dazu führen, dass gegebenenfalls mittels einer geringen Lenkkraft Lenkwinkel eingestellt werden können. Dies spiegelt dem Fahrer wiederum ein Lenkverhalten vor, das das Fahrzeug bzw. das Lenksystem in einer ebenen Kurve nicht hat. Dies kann dem Fahrer entsprechend signalisiert werden, sodass sich dieser mit seinem Fahrverhalten darauf einstellen kann. Der Verlust der Bodenhaftung und eines sich daraus verändernden Lenkverhaltens kann beispielsweise durch die Auswerte- und Steuereinheit detektiert werden, da beispielsweise der Servomotor weniger elektrische Leistung benötigt, um eine Zahnstange zu bewegen. Diese zuvor beschriebene Warnung kann auch unabhängig von dem erfindungsgemäßen Verfahren erfolgen.

Die Erfindung wird nachfolgend anhand eines bevorzugten Ausführungsbeispiels näher erläutert. Die Fig. zeigen:
- Fig. 1: ein schematisches Blockschaltbild eines Lenksystems und
- Fig. 2: ein schematisches Flussdiagramm eines erfindungsgemäßen Verfahrensablaufs.

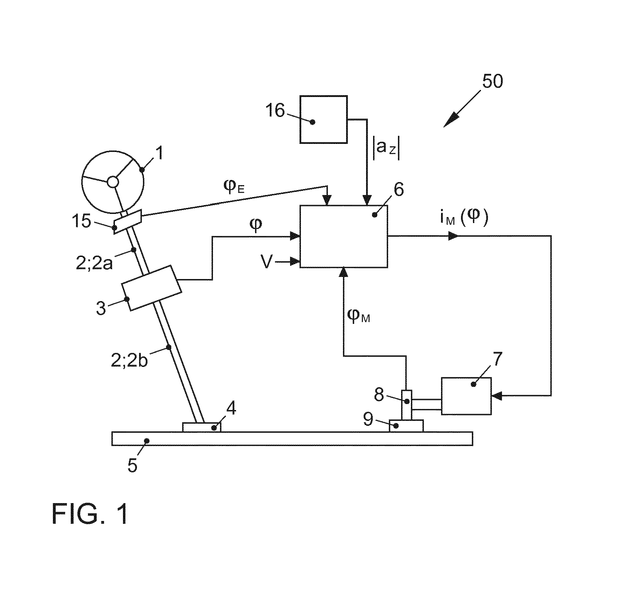

In Fig. 1 ist ein schematisches Blockschaltbild eines Lenksystems 50 mit einer elektromechanischen Servolenkung dargestellt. Hierbei umfasst das Lenksystem 50 eine Lenkhandhabe 1, die als Lenkrad ausgebildet ist. Über die Lenkhandhabe 1 ist ein Lenkwinkel von beispielsweise ±720° einstellbar. Weiter umfasst das Lenksystem eine Lenksäule 2, die einen ersten Abschnitt und einen zweiten Abschnitt aufweist. Der erste Abschnitt stellt dabei eine Eingangswelle 2a und der zweite Abschnitt stellt eine Ausgangswelle 2b der Lenksäule 2 dar. An der Eingangswelle 2a ist ein Drehwinkelsensor 15 angeordnet, der einen Lenkwinkel ϕ_{E} der Eingangswelle 2a misst. Dabei sei angemerkt, dass der Lenkwinkel ϕ_{E} üblicherweise ungleich dem Lenkwinkel an den der Lenkhandhabe 1 ist, da Lenkhandhabe 1 und Lenksäule 2 üblicherweise über ein hier nicht dargestelltes Getriebe gekoppelt sind. Weiter umfasst das Lenksystem einen Drehmomentsensor 3. Der Drehmomentsensor 3 erfasst eine relative Verdrehung zwischen der Eingangswelle 2a und der Ausgangswelle 2b, wobei ein nicht dargestelltes Torsionselement die Eingangswelle 2a mit der Ausgangswelle 2b der Lenksäule 2 drehelastisch verbindet. Über ein Getriebe 4, das auch als Lenkritzel bezeichnet werden kann, ist die Lenksäule 2 mit einer Zahnstange 5 mechanisch verbunden. Weiter umfasst das Lenksystem 50 eine Auswerte- und Steuereinheit 6, einen Servomotor 7, der als Elektromaschine ausgebildet sein kann, einen Rotorlagesensor 8 und ein weiteres Getriebe 9, durch das eine Abtriebsachse des Servomotors 7 mit der Zahnstange 5 mechanisch verbunden ist. Der Drehmomentsensor 3 erzeugt hierbei in Abhängigkeit einer relativen Verdrehung zwischen der Eingangswelle 2a und der Ausgangswelle 2b ein Signal, welches den die relative Verdrehung repräsentierenden Drehwinkel ϕ repräsentiert. Der Drehmomentsensor 3 ist datentechnisch mit der Auswerte- und Steuereinheit 6 verbunden und überträgt das den Drehwinkel ϕ repräsentierende Signal datentechnisch an die Auswerte- und Steuereinheit 6. Diese ermittelt in Abhängigkeit des Drehwinkels ϕ ein Drehmoment M. Vorstellbar ist selbstverständlich auch, dass der Drehmomentsensor 3 über Mittel zur Bestimmung des Drehmoments M verfügt und nur dieses Drehmoment M an die Auswerte- und Steuereinheit 6 übermittelt. Hierbei ist also die Auswerte- und Steuereinheit 6 bzw. der Teil der Auswerte- und Steuereinheit 6, der ein Drehmoment M in Abhängigkeit des Drehwinkels ϕ ermittelt, in den Drehmomentsensor 3 integriert. Die Auswerte- und Steuereinheit 6 erzeugt dann mittels einer Abbildungsfunktion einen Steuerstrom iM, damit der Servomotor 7 ein gewünschtes Unterstützungsmoment über das Getriebe 9 auf die Zahnstange 5 übertragen kann. Der Rotorlagesensor 8 erfasst dann die Rotorlage ϕ_{M} des Servomotors 7 und übermittelt diesen an die Auswerte- und Steuereinheit 6. Alternativ oder ergänzend kann die Auswerte- und Steuereinheit 6 auch aufgrund des Lenkwinkels ϕ_{E} das Drehmoment M bzw. den Steuerstrom iM berechnen.

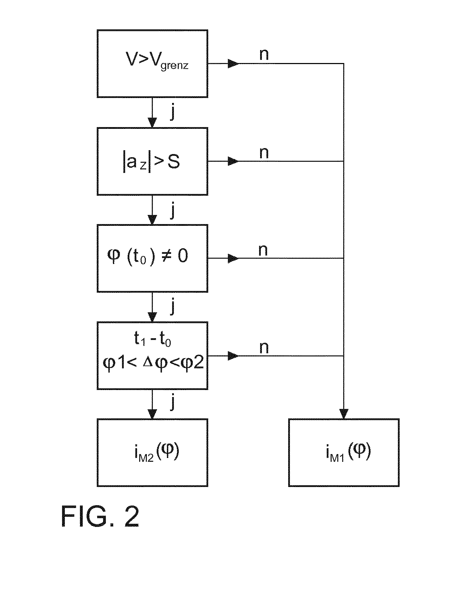

Des Weiteren wird der Auswerte- und Steuereinheit 6 die Kraftfahrzeuggeschwindigkeit V und eine Vertikalbeschleunigung |a_{Z}| von einer Einrichtung 16 übermittelt. Dabei sei angemerkt, dass erfindungsgemäß es auch ausreichend ist, dass nur der Drehmomentsensor 3 oder nur der Drehwinkelsensor 15 vorhanden ist. Die Wirkungsweise des Lenksystems 50 soll nun anhand des Flussdiagramms in Fig. 2 näher erläutert werden.

Das Verfahren wird aktiviert, wenn die Kraftfahrzeuggeschwindigkeit V größer als ein Schwellwert V_{grenz} ist. Ist dies nicht der Fall, wird das Unterstützungsmoment mit der üblichen Abbildungsfunktion i_{M1}(ϕ) bestimmt. Dabei sei angemerkt, dass auch die übliche Abbildungsfunktion üblicherweise mit der Kraftfahrzeuggeschwindigkeit V parametrisiert, wobei bei höheren Kraftfahrzeuggeschwindigkeiten V das Unterstützungsmoment reduziert wird. Ist hingegen die Kraftfahrzeuggeschwindigkeit V größer als der Schwellwert V_{grenz}, so überprüft die Auswerte- und Steuereinheit 6, ob die Vertikalbeschleunigung a_{Z} vom Betrag größer als ein weiterer Schwellwert S ist. Des Weiteren überprüft die Auswerte- und Steuereinheit 6, ob zum Zeitpunkt t₀, wo die Vertikalbeschleunigung |a_{Z}|>S ist, der Lenkwinkel ϕ(t₀)≠0 ist. Der Lenkwinkel ϕ(t₀) kann dabei aus dem Lenkwinkel ϕ_{E} des Drehwinkelsensors 15 oder aus dem Drehwinkel ϕ des Drehmomentsensors 3 bestimmt werden. Ist eine der Bedingungen nicht erfüllt, wird weiter die übliche Abbildungsfunktion i_{M1}(ϕ) zur Berechnung des Unterstützungsmoments verwendet. Sind die Bedingungen erfüllt, überprüft die Auswerte- und Steuereinheit 6, ob nach dem Zeitpunkt t₀ eine Lenkwinkeländerung Δϕ auftritt, die größer als ein erster Schwellwert ϕ1 und kleiner als ein zweiter Schwellwert ϕ2 ist. Ist dies der Fall, so wird die Lenkwinkeländerung Δϕ als Stör-Lenkimpuls betrachtet, der aufgrund der Vertikalbeschleunigung a_{Z} vom Fahrer aufgebracht wurde. Entsprechend wird auf eine geänderte Abbildungsfunktion i_{M2}(ϕ) umgeschaltet. Die geänderte Abbildungsfunktion reduziert das Unterstützungsmoment aufgrund der Winkeländerung Δϕ oder setzt dies im Extremfall auf Null. Dabei erfolgt die Auswertung von Δϕ in Beobachtungsfenster t₁-t₀ von beispielsweise ein oder zwei Sekunden. Winkeländerungen Δϕ außerhalb des Beobachtungsfensters t₁-t₀ werden dann wieder als gewollte Lenkbewegungen interpretiert.

Dabei sei noch einmal klargestellt, dass die Vertikalbeschleunigung a_{Z} die Beschleunigung des Kraftfahrzeugs in Richtung einer Hochachse ist im Gegensatz zur Längsbeschleunigung a_{X} in Fahrtrichtung und einer Querbeschleunigung aγ.

Sollen auch Stör-Lenkimpulse aufgrund eines einhändigen Verreißens unterdrückt werden, so entfällt die Abfrage ϕ(t₀)≠0. Ergänzend kann dann dafür eine Abfrage der Handstellung erfolgen, was aber nicht zwingend ist. Des Weiteren kann neben oder alternativ zur geänderten Abbildungsfunktion i_{M2}(ϕ) eine geänderte Lenkungsdämpfung eingestellt werden, wobei die Dämpfung bei |a_{Z}|>S vergrößert wird.

## Patentansprüche

1. Verfahren zur Unterdrückung von Störgrößen in einem Lenksystem (50) eines Kraftfahrzeugs, mittels eines Servomotors (7), mindestens eines Sensors zur Erfassung eines Lenkwinkels (ϕ) und/oder eines Lenkmoments und/oder einer Lenkkraft sowie einer Auswerte- und Steuereinheit (6), die in Abhängigkeit der Daten des mindestens eines Sensors oder eines weiteren Sensors ein Unterstützungsmoment mittels einer Abbildungsfunktion (i_{M1}(ϕ)) berechnet, das durch den Servomotor (7) aufgebracht wird, wobei mittels einer Einrichtung (16) eine vertikale Beschleunigung (a_{Z}) des Kraftfahrzeugs erfasst oder ermittelt wird, aus den Daten des mindestens einen Sensors ein eingestellter Lenkwinkel (ϕ) und/oder ein eingestelltes Lenkmoment und/oder eine eingestellte Lenkkraft ermittelt wird,
**dadurch gekennzeichnet, dass** nach Erfassung einer vertikalen Beschleunigung (a_{Z}) größer als ein Schwellwert (S) für eine nachfolgende Beobachtungszeit (t₁-t₀) Änderungen des eingestellten Lenkwinkels (Δϕ) und/oder des eingestellten Lenkmoments und/oder der eingestellten Lenkkraft ausgewertet werden, wobei Änderungen des Lenkwinkels (Δϕ) und/oder des Lenkmoments und/oder der Lenkkraft in der Auswerte- und Steuereinheit (6) mittels einer geänderten Abbildungsfunktion (i_{M2}(ϕ)) für das Unterstützungsmoment berechnet werden und/oder eine Lenkungsdämpfung verändert wird.

2. Verfahren nach Anspruch 1, **dadurch gekennzeichnet, dass** das Unterstützungsmoment für die Lenkwinkeländerung (Δϕ) auf Null gesetzt wird.

3. Verfahren nach Anspruch 1 oder 2, **dadurch gekennzeichnet, dass** Lenkwinkeländerungen (Δϕ) größer als ein erster Schwellwert (ϕ1) und kleiner als ein zweiter Schwellwert (ϕ2) mit der geänderten Abbildungsfunktion (i_{M2}(ϕ)) berechnet werden und Lenkwinkeländerungen (Δϕ) größer als der zweite Schwellwert (ϕ2) mit der ursprünglichen Abbildungsfunktion (i_{M1}(ϕ)) berechnet werden.

4. Verfahren nach einem der vorangegangenen Ansprüche, **dadurch gekennzeichnet, dass** das Verfahren in Abhängigkeit eines Schwellwertes (V_{grenz}) einer Kraftfahrzeuggeschwindigkeit (V) aktiviert wird.

5. Verfahren nach einem der vorangegangenen Ansprüche, **dadurch gekennzeichnet, dass** die geänderte Abbildungsfunktion (i_{M2}(ϕ)) von einer Kraftfahrzeuggeschwindigkeit (V) parametrisiert ist.

6. Lenksystem (50) in einem Kraftfahrzeug, umfassend einen Servomotor (7), mindestens einen Sensor zur Erfassung eines Lenkwinkels (ϕ) und/oder einen Lenkmoment und/oder eine Lenkkraft sowie eine Auswerte- und Steuereinheit (6), die in Abhängigkeit der Daten des mindestens einen Sensors oder eines weiteren Sensors ein Unterstützungsmoment mittels einer Abbildungsfunktion (i_{M1}(ϕ)) berechnet, das durch den Servomotor (7) aufgebracht wird, wobei der Auswerte- und Steuereinheit (6) mittels einer Einrichtung (16) eine vertikale Beschleunigung (a_{z}) des Kraftfahrzeuges zugeführt wird, aus den Daten des mindestens einen Sensors ein eingestellter Lenkwinkel (ϕ) und/oder ein eingestelltes Lenkmoment und/oder eine eingestellte Lenkkraft ermittelbar ist,
**dadurch gekennzeichnet, dass** nach Erfassung einer vertikalen Beschleunigung (a_{z}) größer als ein Schwellwert (S) für eine nachfolgende Beobachtungszeit (t₁-t₀) Änderungen des eingestellten Lenkwinkels (Δϕ) und/oder des eingestellten Lenkmoments und/oder der eingestellten Lenkkraft ausgewertet werden, wobei Änderungen des eingestellten Lenkwinkels (Δϕ) und/ oder des eingestellten Lenkmoments und/oder der eingestellten Lenkkraft in der Auswerte- und Steuereinheit (6) mittels einer geänderten Abbildungsfunktion (i_{M2}(ϕ)) für das Unterstützungsmoment berechnet werden und/oder eine Lenkungsdämpfung verändert wird.

7. Lenksystem (50) nach Anspruch 6, **dadurch gekennzeichnet, dass** das Unterstützungsmoment für die Lenkwinkeländerung (Δϕ) auf Null gesetzt wird.

8. Lenksystem nach Anspruch 6 oder 7, **dadurch gekennzeichnet, dass** Lenkwinkeländerungen (Δϕ) größer als ein erster Schwellwert (ϕ1) und kleiner als ein zweiter Schwellwert (ϕ2) mit der geänderten Abbildungsfunktion (i_{M2}(ϕ)) berechnet werden und Lenkwinkeländerungen (Δϕ) größer als der zweite Schwellwert (ϕ2) mit der ursprünglichen Abbildungsfunktion (i_{M1}(ϕ)) berechnet werden.

9. Lenksystem nach einem der Ansprüche 6 bis 8, **dadurch gekennzeichnet, dass** die Umschaltung auf die geänderte Abbildungsfunktion (i_{M2}(ϕ)) durch Überschreitung eines Schwellwertes (V_{grenz)} einer Kraftfahrzeuggeschwindigkeit (V) aktiviert wird.

10. Lenksystem (50) nach einem der Ansprüche 6 bis 10, **dadurch gekennzeichnet, dass** die geänderte Abbildungsfunktion (i_{M2}(ϕ)) von einer Kraftfahrzeuggeschwindigkeit (V) parametrisiert ist.

## Claims

1. Method for the suppression of interference variables in a steering system (50) of a motor vehicle by means of a servomotor (7), at least one sensor for sensing a steering angle (ϕ) and/or a steering torque and/or a steering force as well as an evaluation and control unit (6) which calculates an assistance torque by means of a mapping function (i_{M1}(ϕ)) as a function of the data of the at least one sensor or of a further sensor, which assistance torque is applied by means of the servomotor (7), wherein a vertical acceleration (a_{Z}) of the motor vehicle is sensed or determined by means of a device (16), and a set steering angle (ϕ) and/or a set steering torque and/or a set steering force is determined on the basis of the data of the at least one sensor,
**characterized in that** after the sensing of a vertical acceleration (a_{Z}) which is greater than a threshold value (S) for a subsequent observation time (t₁-t₀), changes in the set steering angle (Δϕ) and/or the set steering torque and/or the set steering force are evaluated, wherein changes in the steering angle (Δϕ) and/or the steering torque and/or the steering force are calculated in the evaluation and control unit (6) by means of a changed mapping function (i_{M2}(ϕ)) for the assistance torque and/or steering damping is changed.

2. Method according to Claim 1, **characterized in that** the assistance torque for the steering angle change (Δϕ) is set to zero.

3. Method according to Claim 1 or 2, **characterized in that** steering angle changes (Δϕ) which are greater than a first threshold value (Δ1) and smaller than a second threshold value (ϕ2) are calculated with the changed mapping function (i_{M2}(ϕ)), and steering angle changes (Δϕ) which are greater than the second threshold value (ϕ2) are calculated with the original mapping function (i_{M1}(ϕ)).

4. Method according to one of the preceding claims, **characterized in that** the method is activated as a function of a threshold value (Vₗᵢₘᵢₜ) of a motor vehicle velocity (V).

5. Method according to one of the preceding claims, **characterized in that** the changed mapping function (i_{M2}(ϕ)) is parameterized by a motor vehicle velocity (V).

6. Steering system (50) in a motor vehicle, comprising a servomotor (7), at least one sensor for sensing a steering angle (ϕ) and/or a steering torque and/or a steering force as well as an evaluation and control unit (6) which calculates an assistance torque by means of a mapping function (i_{M1}(ϕ)) as a function of the data of the at least one sensor or of a further sensor, which assistance torque is applied by means of the servomotor (7), wherein a vertical acceleration (a_{Z}) of the motor vehicle is fed to the evaluation and control unit (6) by means of a device (16), and a set steering angle ((ϕ) and/or a set steering torque and/or a set steering force can be determined on the basis of the data of the at least one sensor,
**characterized in that** after the sensing of a vertical acceleration (a_{Z}) which is greater than a threshold value (S) for a subsequent observation time (t₁-t₀), changes in the set steering angle (Δϕ) and/or the set steering torque and/or the set steering force are evaluated, wherein changes in the set steering angle (Δϕ) and/or the set steering torque and/or the set steering force are calculated in the evaluation and control unit (6) by means of a changed mapping function (i_{M2}((ϕ)) for the assistance torque and/or steering damping is changed.

7. Steering system (50) according to Claim 6, **characterized in that** the assistance torque for the steering angle change (Δϕ) is set to zero.

8. Steering system according to Claim 6 or 7, **characterized in that** steering angle changes (Δϕ) which are greater than a first threshold value (ϕ1) and smaller than a second threshold value (ϕ2) are calculated with the changed mapping function (i_{M2}(ϕ)), and steering angle changes (Δϕ) which are greater than the second threshold value (ϕ2) are calculated with the original mapping function (i_{M1}(ϕ)).

9. Steering system according to one of Claims 6 to 8, **characterized in that** the switching over to the changed mapping function (i_{M2}(ϕ)) is activated by the exceeding of a threshold value (Vₗᵢₘᵢₜ) of a motor vehicle velocity (V).

10. Steering system according to one of Claims 6 to 10, **characterized in that** the changed mapping function (i_{M2}(ϕ)) is parameterized by a motor vehicle velocity (V).

## Revendications

1. Procédé destiné à supprimer des grandeurs perturbatrices dans un système de direction (50) d'un véhicule automobile au moyen d'un servomoteur (7), d'au moins un capteur destiné à détecter un angle de braquage (ϕ) et/ou un couple de braquage et/ou un effort de braquage, ainsi que d'une unité d'évaluation et de commande (6), qui en fonction des données de l'au moins un capteur ou d'un capteur supplémentaire calcule au moyen d'une fonction de reproduction (i_{M1}(ϕ)) un couple d'assistance qui est appliqué par le servomoteur (7), au moyen d'un dispositif (16), une accélération verticale (a_{Z}) du véhicule automobile étant détectée ou recherchée, à partir des données de l'au moins un capteur, un angle de braquage (ϕ) réglé ou un couple de braquage réglé et/ou un effort de braquage réglé étant recherché,
**caractérisé en ce qu'**après la détection d'une accélération verticale (a_{Z}) supérieure à une valeur seuil (S) pour un temps d'observation (t-t₀) suivant, des modifications de l'angle de braquage (Δϕ) réglé et/ou du couple de braquage réglé et/ou de l'effort de braquage réglé sont évaluées, des modifications de l'angle de braquage (Δϕ) et/ou du couple de braquage et/ou de l'effort de braquage étant calculées dans l'unité d'évaluation et de commande (6) au moyen d'une fonction de reproduction (i_{M2}(ϕ)) modifiée pour le couple d'assistance et/ou un amortissement de braquage étant modifié.

2. Procédé selon la revendication 1, **caractérisé en ce que** le couple d'assistance pour la modification de l'angle de braquage (Δϕ) est remis à zéro.

3. Procédé selon la revendication 1 ou la revendication 2, **caractérisé en ce que** des modifications de l'angle de braquage (Δϕ) supérieures à une première valeur seuil (ϕ1) et inférieures à une deuxième valeur seuil (ϕ2) sont calculées avec la fonction de reproduction (i_{M2}(ϕ)) modifiée et que des modifications de l'angle de braquage (Δϕ) supérieures à la deuxième valeur seuil (ϕ2) sont calculées avec la fonction de reproduction (i_{mM1}(ϕ)) initiale.

4. Procédé selon l'une quelconque des revendications précédentes, **caractérisé en ce que** le procédé est activé en fonction d'une valeur seuil (V_{grenz}) d'une vitesse (V) du véhicule.

5. Procédé selon l'une quelconque des revendications précédentes, **caractérisé en ce que** la fonction de reproduction (i_{M2}(ϕ)) modifiée est paramétrée par une vitesse (V) du véhicule.

6. Système de direction (50) dans un véhicule automobile, comprenant un servomoteur (7), au moins un capteur pour détecter un angle de braquage (ϕ) et/ou un couple de braquage et/ou un effort de braquage, ainsi qu'une unité d'évaluation et de commande (6), qui en fonction des données de l'au moins un capteur ou d'un capteur supplémentaire calcule un couple d'assistance au moyen d'une fonction de reproduction (i_{M1}(ϕ)) qui est appliquée par le servomoteur (7), au moyen d'un dispositif (16), une accélération verticale (a_{z}) du véhicule automobile étant amenée vers l'unité d'évaluation et de commande (6), à partir des données de l'au moins un capteur, un angle de braquage (ϕ) réglé et/ou un couple de braquage réglé et/ou un effort de braquage réglé pouvant être recherché,
**caractérisé en ce qu'**après la détection d'une accélération verticale (a_{Z}) supérieure à une valeur seuil (S) pour un temps d'observation (t₁-t₀) suivant, des modifications de l'angle de braquage (Δϕ) réglé et/ou du couple de braquage réglé et/ou de l'effort de braquage réglé sont évaluées, des modifications de l'angle de braquage (Δϕ) et/ou du couple de braquage et/ou de l'effort de braquage étant calculées dans l'unité d'évaluation et de commande (6) au moyen d'une fonction de reproduction (i_{M2}(ϕ)) modifiée pour le couple d'assistance et/ou un amortissement de braquage étant modifié.

7. Système de direction (50) selon la revendication 6, **caractérisé en ce que** le couple d'assistance pour la modification de l'angle de braquage (Δϕ) est remis à zéro.

8. Système de direction (50) selon la revendication 6 ou la revendication 7, **caractérisé en ce que** des modifications de l'angle de braquage (Δϕ) supérieures à une première valeur seuil (ϕ1) et inférieures à une deuxième valeur seuil (ϕ2) sont calculées avec la fonction de reproduction (i_{M2}(ϕ)) modifiée et que des modifications de l'angle de braquage (Δϕ) supérieures à la deuxième valeur seuil (ϕ2) sont calculées avec la fonction de reproduction (i_{M1}(ϕ)) initiale.

9. Système de direction selon l'une quelconque des revendications 6 à 8, **caractérisé en ce que** le passage à la fonction de reproduction (i_{M2}(ϕ)) modifiée est activé par dépassement d'une valeur seuil (V_{grenz}) d'une vitesse (V) du véhicule.

10. Système (50) selon l'une quelconque des revendications 6 à 10, **caractérisé en ce que** la fonction de reproduction (i_{M2}(ϕ)) modifiée est paramétrée par une vitesse (V) du véhicule automobile.
